# EUROPEAN PATENT APPLICATION

(11) **EP 2 854 407 A1**
(43) Date of publication of application: **01.04.2015**
(21) Application number: 13186780.6
(22) Date of filing: 30.09.2013
(51) Int. Cl.: H04N 21/20, G06Q 10/10, G06Q 50/12

(54) **Method and system for conducting an interactive survey in a cable television network**

(71) Applicant: Advanced Digital Broadcast S.A., 1292 Chambesy (CH)
(72) Inventor: Micewicz, Jaroslaw, 65-119 Zielona Gora (PL); Sergiel, Przemyslaw, 65-119 Zielona Gora (PL)
(74) Representative: Pawlowski, Adam

(57) **Abstract**

A computer-implemented method for conducting an interactive survey in a cable network comprising a head-end infrastructure (110) configured to deliver television programming and applications data via the cable network to a plurality of terminals (120), characterized by: storing, in a users database (131) at a survey manager module (130), profiles of network users; providing at the survey manager module (130) a questions database (133) comprising a plurality of questions, answers and user profile characteristics for which the questions are directed; detecting (201) in the terminal (120) that a new user has been assigned to a terminal; requesting (203) by the terminal (120) a question from the survey manager module (130) via the cable network; presenting (205) the question to the user at the terminal (120) and collecting the answer via the terminal (120); and sending (206) the answer from the terminal (120) to the answers database (134) at the survey manager module (130) via the cable network.

## Description

The object of the invention is a method and a system for conducting an interactive survey in a cable television network.

There are known various methods for conducting interactive surveys.

A US patent US8380566 discloses an interactive voting or survey method, which combines the use of short text message systems (SMS) via cell phones with a database and website to enable advertisers to view in real time customer responses to a direct response campaign. Customers are invited to respond to a defined advertisement on for example a billboard by responding to a single telephone number associated with the website by sending a text message linked to that particular advertisement, i.e. a single word. A computer receives and analyses the responses and sends an acknowledgement message to the customer.

A US patent US8135331 discloses a system for mobile devices that facilitates the creation and dissemination of user interest surveys to a plurality of mobile devices and PCs/laptops that comprise a user interest survey client component. A computer or PC comprising an user interest survey generator is used to generate audio assisted user interest surveys and communicate it to a distribution server for dissemination. Recipient devices, such as PCs and Mobile devices comprise an user interest survey client component to receive and present user interest survey to a user, gather user interest information, and to send it back to the distribution server or an alternate destination.

The above methods are designed for users of mobile devices, and the operator of the system must gain prior authorization of users to contact them.

There are known communication networks wherein a server and a large number of communication terminals is owned by a single entity and a number of users use it by the permission of the network owner - for example, cable television networks at a hotel facility. Such terminals could be effectively used for conducting various surveys among users. The aim of the present invention is to provide a method and system for conducting an interactive survey in a cable television network.

The object of the invention is a computer-implemented method for conducting an interactive survey in a cable network comprising a head-end infrastructure configured to deliver television programming and applications data via the cable network to a plurality of terminals, comprising the steps of: storing, in a users database at a survey manager module, profiles of network users; providing at the survey manager module a questions database comprising a plurality of questions, answers and user profile characteristics for which the questions are directed; detecting in the terminal that a new user has been assigned to a terminal; requesting by the terminal a question from the survey manager module via the cable network; presenting the question to the user at the terminal and collecting the answer via the terminal; and sending the answer from the terminal to the answers database at the survey manager module via the cable network.

Preferably, the method comprises determining the time at which the question is to be presented to a particular time

Preferably, the method comprises determining the time at which the question is to be presented to a particular time elapsed since presenting the previous question.

Preferably, the method comprises determining the time at which the question is to be presented depending on the profile of the user.

Preferably, the method comprises determining the time at which the question is to be presented depending on the user activity.

Preferably, the method comprises determining the time at which the question is to be presented depending on the question to be presented.

Another object of the invention is a computer program comprising program code means for performing all the steps of the method according to the invention when said program is run on a computer, as well as a computer readable medium storing computer-executable instructions performing all the steps of the method according to the invention when executed on a computer.

Another object of the present invention is a system for conducting an interactive survey in a cable network comprising a head-end infrastructure configured to deliver television programming and applications data to a plurality of terminals via the cable network, the system further comprising: - a survey manager module comprising: a users database and configured to store profiles of network users; a questions database and configured to store a plurality of questions, answers and user profile characteristics for which the questions are directed; and a survey application operable by the user terminal and configured to: detect that a new user has been assigned to a terminal; request via the cable network a question from the survey manager module matching the determined profile of the user; present the question to the terminal user and collect the answer via the terminal; and send the answer via the cable network to the answers database at the survey manager module.

The present invention is shown by means of exemplary embodiment on a drawing, in which:
Fig. 1 shows the structure of the system according to the invention;
Fig. 2 shows the steps of the method according to the invention;
Fig. 3 shows exemplary contents of a database of users;
Fig. 4 shows exemplary contents of a database of terminals;
Fig. 5 shows exemplary contents of a database of questions;
Fig. 6 shows exemplary contents of a database of answers.

The system according to the invention is directed to cable television networks, such as cable networks at hotel facilities. Such network comprises a headend infrastructure 110, which comprises cable network communication interface 111 for transmitting to the cable network data comprising a mix of audio/video content (such as television programs and/or video on demand content) and applications. Data from the headend infrastructure is received by a plurality of terminals 120, such as television sets with integrated cable television tuners, set-top boxes (STBs) or set-back boxes (SBBs).

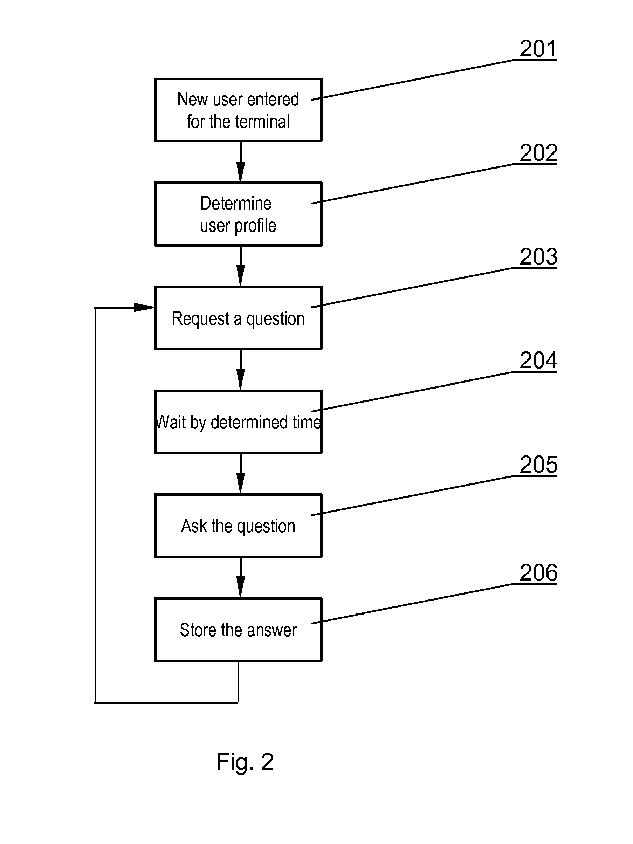

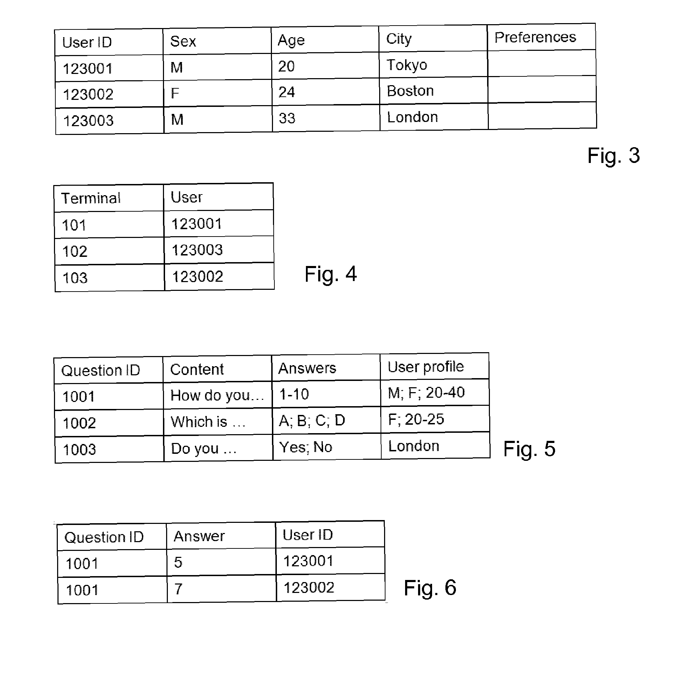

The system further comprises a survey manager module 130 for carrying out the method shown in Fig. 2. The survey manager module 130 comprises a database of users 131 which stores profiles of users that may use the terminals. Exemplary content of user profile database is shown in Fig. 3. For example, the user profile may comprise data on sex, age, place of living, duration of stay at the hotel, etc.

Each user profile is identified by a unique user identifier, such as a social security number, personal ID number or a number assigned by the network operator to a particular user. The user profile may further comprise a list of preferences, which may be defined by the user during the setup of the system or may be generated by the system while the user uses the cable system, e.g. by monitoring user activity, such as the time at which the tv is watched, the time at which the room is occupied, the content which is watched at the tv etc.

The user profile may be stored together with the other user data, such as user ID, for future use even if the user stops using the system (e.g. checks out of the hotel), to provide better-tailored surveys in future when the user returns. The contents of the users database 131 are provided by staff of the front-desk, which may use a dedicated front-desk terminal 140 to communicate with the survey manager module 130 to setup the system and enter user data e.g. when the user checks in to the hotel. The database of users 131 may be joined with a database of hotel guests and updated automatically according to the entries in the guests database, so that double entry of data is avoided.

The survey manager module 130 further comprises a database of terminals 132, which stores data on terminals available in the system and users assigned to the terminals, as shown for example in Fig. 4. Each terminal 120 is identified by a terminal identifier, which can be a unique identifier set by the system or can be a room number. If a terminal is not to be used by the survey manager (e.g. the room is not occupied or the user does not wish to be surveyed), it may be simply not assigned with any user identifier.

The survey manager module 130 further comprises a database of survey questions 133, which comprises a set of questions which are to be directed to the users of the system. Each question is identified by a unique identifier, question content, possible answers and profile characteristics, as shown by example on Fig. 5. The profile characteristics determine the type of user for whom the question shall be directed.

Furthermore, the survey manager module 130 comprises a database of survey answers 134, which comprises the answers provided by the users, as shown by example on Fig. 6. The database comprises the question identifier, the identifier of the user who answered the question, the answer provided and other optional data, such as the time at which the question was asked, the period of response etc.

The survey is conducted by a survey application 135 of the survey manager 130 and by the survey application 121 of the user terminal 120. The survey applications 121, 135 operate according to the procedure of Fig. 2 and communicate with each other via the head-end infrastructure 110 which enables data transmission via the cable television network.

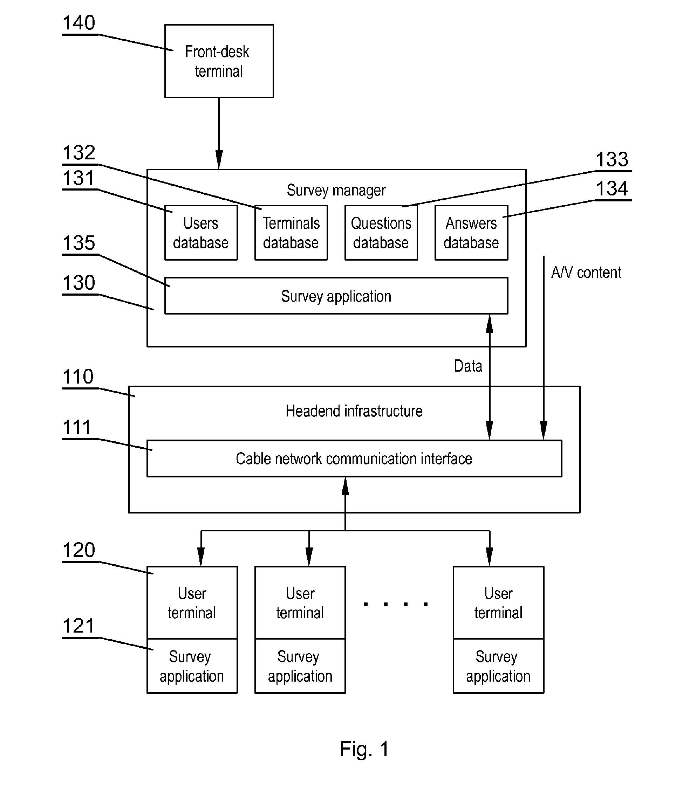

The survey manager module 130 can be a stand-alone computer, as shown in Fig. 1, or a module implemented at the head-end infrastructure.

The survey application 121 of the terminal 120 is started in step 201 when a new user is entered for the terminal - for example, when the user checks in the hotel and the front desk staff enters the user data to the system. At that time, the terminal is typically notified about the user data to welcome the user at the display screen. The same "welcome screen trigger" may initiate the survey application. Next, the survey application 121 in step 202 determines the profile of the user for which the application is to conduct the survey, based on database of terminals 132 or data of user delivered directly to the terminal. Next, in step 203, a question matching the user profile is requested by the survey application 121 of the user terminal 120 from the questions database. Next, in step 204 the survey application 121 of the terminal 120 waits a determined time at which a question shall be asked to the user - for example, a question can be asked at a specific time (e.g. every full hour), at specific time intervals (e.g. an hour after the last question was asked), at specific events (e.g. upon advertisement break at the tv programme, upon a change of tv programme, upon selection of a video on demand event, before powering off the terminal), or at random time intervals. The time at which the question shall be asked may be dependent on the user profile. Alternatively, steps 203 and 204 can be interchanged and the question timing can be further adjusted to the type or content of the question. Then the question is presented to the user in step 205 at the determined time. After the user gives the answer, the answer is sent to the answers database 134 in step 206 and the procedure returns to step 203.

It can be easily recognized, by one skilled in the art, that the aforementioned method for conducting an interactive survey may be performed and/or controlled by one or more computer programs. Such computer programs are typically executed by utilizing the computing resources of the device. The computer programs can be stored in a non-volatile memory (or otherwise a non-transitory computer storage medium), for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the appended claims in envisaged in the present application.

## Claims

1. A computer-implemented method for conducting an interactive survey in a cable network comprising a head-end infrastructure (110) configured to deliver television programming and applications data via the cable network to a plurality of terminals (120), **characterized by**:
- storing, in a users database (131) at a survey manager module (130), profiles of network users;
- providing at the survey manager module (130) a questions database (133) comprising a plurality of questions, answers and user profile characteristics for which the questions are directed;
- detecting (201) in the terminal (120) that a new user has been assigned to a terminal;
- requesting (203) by the terminal (120) a question from the survey manager module (130) via the cable network;
- presenting (205) the question to the user at the terminal (120) and collecting the answer via the terminal (120); and
- sending (206) the answer from the terminal (120) to the answers database (134) at the survey manager module (130) via the cable network.

2. The method according to claim 1, **characterized by** determining (202) the time at which the question is to be presented to a particular time

3. The method according to claim 1, **characterized by** determining (202) the time at which the question is to be presented to a particular time elapsed since presenting the previous question.

4. The method according to claim 1, **characterized by** determining (202) the time at which the question is to be presented depending on the profile of the user.

5. The method according to claim 1, **characterized by** determining (202) the time at which the question is to be presented depending on the user activity.

6. The method according to claim 1, **characterized by** determining (202) the time at which the question is to be presented depending on the question to be presented.

7. A computer program comprising program code means for performing all the steps of the method according to any of claims 1-5 when said program is run on a computer.

8. A computer readable medium storing computer-executable instructions performing all the steps of the method according to any of claims 1-5 when executed on a computer.

9. A system for conducting an interactive survey in a cable network comprising a head-end infrastructure (110) configured to deliver television programming and applications data to a plurality of terminals (120) via the cable network, **characterized by** further comprising:
- a survey manager module (130) comprising::
- a users database (131) and configured to store profiles of network users;
- a questions database (133) and configured to store a plurality of questions, answers and user profile characteristics for which the questions are directed;
- a survey application (121) operable by the user terminal (120) and configured to:
- detect (201) that a new user has been assigned to a terminal;
- request (203) via the cable network a question from the survey manager module (130) matching the determined profile of the user;
- present (205) the question to the terminal user and collect the answer via the terminal (120); and
- send (206) the answer via the cable network to the answers database (134) at the survey manager module (130).
